# NOUVEAU FASCICULE DE BREVET EUROPEEN

(11) **EP 2 089 836 B2**
(45) Date de publication et mention de la décision concernant l'opposition: **15.02.2017**
(45) Mention de la délivrance du brevet: 28.03.2012
(21) Numéro de dépôt: 07866469.5
(22) Date de dépôt: 30.10.2007
(51) Int. Cl.: G06K 19/077, G06K 19/07

(54) **CARTE À MICROCIRCUIT AVEC ANTENNE DÉPORTÉE**
MIKROSCHALTPLATTE MIT OFFSET-ANTENNE
MICROCIRCUIT BOARD WITH OFFSET ANTENNA

(30) Priorité: 03.11.2006 FR 0654725
(43) Date de publication de la demande: 19.08.2009
(73) Titulaire: OBERTHUR TECHNOLOGIES, 92300 Levallois-Perret (FR)
(72) Inventeur: ERAY, Yves, 35235 Thorigne Fouillard (FR); VENAMBRE, Jacques, 14123 Ifs (FR)
(74) Mandataire: Santarelli
(86) Numéro de dépôt international: PCT/FR2007/001800
(87) Numéro de publication internationale: WO 2008/059135

(56) Documents cités:
- EP-A- 1 365 353
- EP-A- 1 411 468
- EP-A- 1 439 487
- WO-A-2004/057519
- WO-A-2005/104584

## Description

La présente invention concerne les entités électroniques à microcircuit comprenant une antenne pour des communications sans fil, et plus particulièrement les entités électroniques à microcircuit incorporant une antenne déportée.

Les entités électroniques comportant une antenne permettant un fonctionnement à distance en relation avec au moins une autre entité sont de plus en plus fréquemment utilisées. Il existe par exemple des cartes à microcircuit adaptées à interagir sans connexion filaire avec d'autres systèmes électroniques. Certaines de ces entités électroniques sont des systèmes autonomes utilisés pour des fonctions particulières tandis que d'autres sont utilisés comme interface entre deux systèmes électroniques.

Ces entités électroniques peuvent être regroupées en trois catégories distinctes,
- les entités électroniques sans contact (*contactless*) qui possèdent une antenne et un ou plusieurs composants reliés à cette antenne, sans contact externe ;
- les entités électroniques mixtes ou hybrides qui comportent une antenne, des contacts externes et un ou plusieurs composants, pour lesquelles le mode de communication, avec ou sans contact, est lié à l'application visée ; et,
- les entités électroniques à double interface qui comportent une antenne, des contacts externes et un ou plusieurs composants, pour lesquelles les deux modes de communication, avec ou sans contact, peuvent être utilisés simultanément pour une même application.

Typiquement, les cartes sans contact, mixtes ou hybrides ou à double interface sont adaptées à communiquer sans liaison filaire avec une station extérieure. La station extérieure est, de préférence, un lecteur de carte. La communication entre le lecteur de carte et la carte est avantageusement réalisée selon un schéma maître-esclave, c'est-à-dire que le lecteur envoie des commandes et que la carte répond à ces commandes. En variante, la communication peut être initiée par l'entité électronique.

Selon une technologie connue, l'antenne est formée par plusieurs spires conductrices formées au niveau de l'une au moins des couches du support polymère de l'entité électronique, en général au niveau de la couche dénommée *'inlay'* typiquement réalisée en PVC (chlorure de polyvinyle) ou en PET (polyéthylène téréphtalate). Il existe plusieurs méthodes pour réaliser de telles antennes telles que le dépôt d'un fil conducteur, la photogravure, la sérigraphie ou l'impression, à base d'encre conductrice. Alternativement, l'antenne peut être formée sur du papier, par exemple pour les passeports, ou sur un support époxy tel qu'un PCB (*Printed Circuit Board*) monté ensuite dans une clé USB ou tout autre entité électronique.

De façon générale, l'antenne est formée sur une surface sensiblement plate et elle est connectée à un microprocesseur comportant typiquement deux bornes de connexion.

La réalisation d'antennes dans ce type d'entités électroniques pose certains problèmes. Tout d'abord, l'encombrement d'une antenne de bonne performance n'est pas réellement compatible avec la taille de certaines de ces entités électroniques. Avec une largeur de pistes typique de 100µm, les pistes étant espacées de 100µm, la taille de l'antenne est supérieure à la surface des mini cartes. Une solution est alors d'utiliser une résolution plus fine, au détriment des coûts de fabrication.

D'autre part, pour certaines applications particulières, l'intégration de l'antenne dans l'entité électronique à microcircuit peut poser des problèmes de transmission de données en raison de la position de l'entité électronique à microcircuit dans l'appareil électronique utilisant cette entité électronique. Par exemple, les cartes à microcircuit utilisées dans les téléphones mobiles sont généralement placées entre le corps du téléphone et la batterie. Ainsi, en raison des perturbations électromagnétiques générées par le corps du téléphone et la batterie, l'émission et la réception de données à partir d'une antenne située dans les cartes à microcircuit utilisées dans les téléphones mobiles sont difficiles à obtenir de façon satisfaisante.

Pour remédier à cet inconvénient, la demande de brevet WO 2005/104584 propose, notamment par référence à la figure 13, d'insérer dans le lecteur de carte une carte sans microcircuit, comportant simplement des contacts, permettant de déplacer la carte SIM (*Subscriber Identity Module*). La carte SIM comportant le microcircuit et l'antenne, reliée à la carte sans microcircuit, est située de l'autre côté de la batterie, de façon à limiter l'influence de la batterie sur l'antenne. Cependant, une telle solution comporte plusieurs inconvénients. Tout d'abord, cette carte SIM est a priori d'épaisseur comparable à celle d'une carte à microcircuit pour téléphone mobile et aussi peu flexible que cette dernière. Il est donc généralement impossible d'installer l'ensemble formé de la carte sans microcircuit, de la carte SIM et de la connexion entre ces deux cartes dans le boîtier d'un téléphone qui n'a pas été prévu pour cela. D'autre part, le procédé de fabrication d'un tel ensemble n'étant pas directement dérivable d'un procédé standard, il semble difficile de fabriquer ces ensembles à un coût raisonnable.

Par ailleurs, la demande de brevet EP 1 439 487 décrit un dispositif portable comprenant un composant de type RFID. Une antenne reliée à un microcircuit est réalisée sur un substrat qui est agencé entre la batterie du dispositif et son couvercle. Une feuille en matériau magnétique est placée entre la batterie et le substrat pour améliorer la distance de communication entre le dispositif et un dispositif externe utilisant l'antenne formée sur le substrat. Selon un mode de réalisation particulier, l'antenne formée sur le substrat peut être connectée à un microcircuit distant à l'aide d'un support de circuit souple et de connecteurs.

De plus, le brevet EP 1 439 487 A décrit également un dispositif d'information portable comportant une carte à microcircuit.

Le document DE10 2004 029984 A1 décrit enfin un dispositif à microcircuit comprenant un corps sensiblement rigide incorporant au moins un microcircuit et un film souple comportant une antenne connectée audit microcircuit, où ledit film s'étend au moins partiellement au-delà dudit corps.

L'invention permet de résoudre au moins un des problèmes exposés précédemment.

L'invention a pour objet un procédé de fabrication d'un dispositif d'une carte a microcircuit, comprenant un corps sensiblement rigide incorporant au moins un microcircuit et un film souple comportant une antenne connectée audit au moins un microcircuit, et ledit film s'étendant partiellement au-delà dudit corps dans lequel il est partiellement intégré, ce procédé comprenant les étapes suivantes,
- positionnement dudit film comprenant ladite au moins une antenne dans un moule, ladite antenne étant au moins partiellement à l'extérieur de la cavité de moulage dudit moule ; et,
- dépôt du matériau dudit corps dans ladite cavité de moulage dudit moule.

Ce procédé permet de fabriquer de tels dispositifs en utilisant certaines étapes connues de fabrication de cartes à microcircuit.

Selon un mode de réalisation particulier, ledit au moins un microcircuit est préalablement positionné sur ledit film pour simplifier la fabrication du dispositif. Au moins un microcircuit peut être positionné dans ledit matériau déposé dans ledit moule lors de la fabrication du dispositif, notamment lorsque ledit film ne comprend pas de microcircuit.

Le dispositif selon un mode qui ne fait pas partie de la présente invention peut également être fabriqué par lamination de plusieurs feuilles de plastique avec ledit film pour former ledit corps.

D'autres avantages, buts et caractéristiques de la présente invention ressortent de la description détaillée qui suit, faite à titre d'exemple non limitatif, au regard des dessins annexés dans lesquels :
- la figure 1, comprenant les figures 1 a et 1 b, illustre un exemple de carte à microcircuit selon l'invention ;
- la figure 2 illustre un exemple d'utilisation d'une carte à microcircuit, similaire à celle représentée sur la figure précédente, pour une application de téléphonie mobile ;
- la figure 3, comprenant les figures 3a, 3b, 3c et 3d, présente schématiquement une façon d'installer l'entité électronique de l'invention dans un appareil tel que le téléphone mobile illustré sur la figure 2 ;
- la figure 4 illustre un exemple de fabrication d'une entité électronique selon l'invention, telle que la carte à microcircuit décrite par référence à la figure 1 ; et,
- la figure 5 illustre un autre exemple d'entité électronique.

Pour remédier aux inconvénients mentionnés précédemment, le dispositif comprend un corps sensiblement rigide, par exemple en matière plastique, avec un microcircuit, et un film souple comprenant une antenne connectée au microcircuit, où l'antenne portée par le film s'étend au moins partiellement au-delà du corps.

Un exemple d'entité électronique adaptée à incorporer un tel dispositif concerne les mini cartes qui regroupent les cartes de surface strictement inférieure au format ID-00, préférentiellement au format ID-000. Il peut s'agir de cartes à puce, c'est-à-dire de cartes à microcircuit conformes à la norme ISO-7816, dont l'épaisseur est d'environ 0,76mm et comportant un microcontrôleur sécurisé.

Il peut également s'agir de cartes conformes à d'autres formats tels que le format MMC (*MultiMedia Card*), le format RS-MMC (*Reduced-Size MultiMedia Card*) ou le format UICC (*Universal Integrated Circuit Card*). L'entité électronique peut également être un boîtier encapsulant un circuit intégré et comportant des pattes de contact, par exemple un boîtier DIP (*Dual In-line Package*).

Préférentiellement, il s'agit d'une carte d'un format destiné à être inséré dans un téléphone mobile ou dans une entité électronique comportant des moyens de communication mobile.

La carte à microcircuit est préférentiellement adaptée à communiquer conformément à la norme ISO1443 à une fréquence d'environ 13,56 Mhz. Il peut s'agir par exemple d'une carte de type dit duale interface, hybride, ou sans contact. En variante, la carte est par exemple adaptée à communiquer sans contact selon la spécification zigbee. Des informations sur cette spécification sont disponibles sur le site www.zigbee.org.

Les figures utilisées pour illustrer le dispositif sont données à titre d'exemples. Il ne doit pas être tenu compte des proportions et des échelles, celles-ci n'ayant pas été respectées afin de mettre en avant les caractéristiques de l'invention au détriment des caractéristiques d'éléments connus en eux-mêmes.

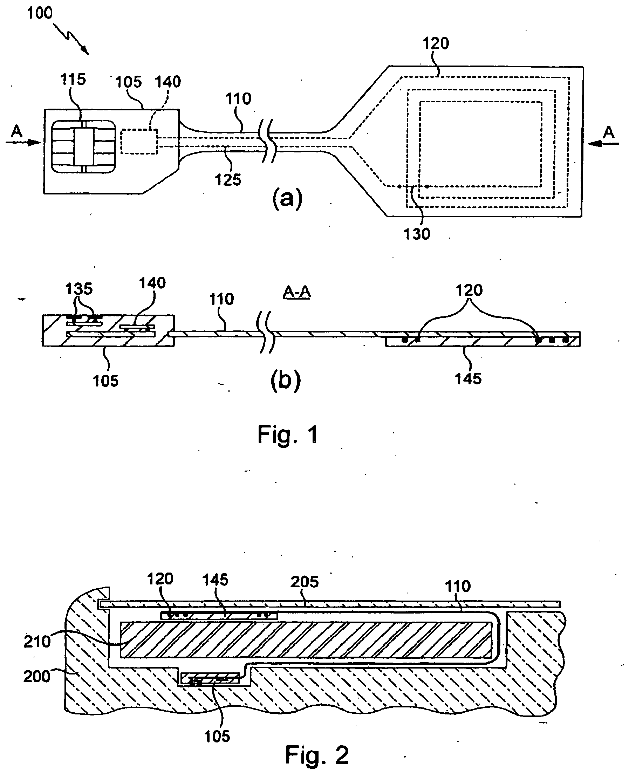

La figure 1, comprenant les figures 1a et 1b, illustre un exemple de carte à microcircuit. La figure 1a est une vue de dessus de la carte à microcircuit tandis que la vue 1 b est une vue en coupe selon le repère A-A. La carte à microcircuit 100 illustrée sur la figure 1 est une carte hybride.

Cette carte comprend un corps de carte sensiblement rigide 105 et un film souple 110 sur lequel est formée une antenne 120. Un premier microcircuit 115 est intégré dans le corps 105 de carte pour les applications nécessitant des contacts. Le circuit 115 peut être par exemple un microcircuit de carte SIM. Un second microcircuit 140 est intégré dans le corps 105 de la carte pour les applications sans contact. Le microcircuit 140 peut être positionné à côté du circuit 115, du même côté par rapport au film 110.

Le film 110 comprend trois parties. Une première partie est au moins partiellement intégrée au corps 105 de la carte afin d'établir un contact entre le microcircuit 140 et l'antenne 120. Une deuxième partie est utilisée pour relier l'antenne au corps 105 de carte. Elle comprend deux pistes conductrices 125 permettant de relier les deux extrémités de l'antenne, formée sur la troisième partie, à deux contacts du microcircuit 140. L'antenne 120, formée dans la troisième partie, comprend de préférence un ensemble de spires d'une piste conductrice. Selon un mode de réalisation particulier, un pont 130 est formé pour connecter l'extrémité de l'antenne 120 se trouvant à l'intérieur des spires formant l'antenne à l'une des pistes conductrices 125. Il convient de noter qu'alternativement, au moins une partie de l'antenne peut être intégrée au corps 105 de la carte.

La seconde partie du film, entre le corps 105 de carte et l'antenne 120 est, de préférence, plus étroite que le corps 105 et que l'antenne 120, favorisant ainsi le positionnement du corps 105 de la carte et de l'antenne 120.

Comme illustré sur la figure 1b, le corps 105 de carte comprend les microcircuits 115 et 140. Le circuit 115 est relié à des connecteurs 135 affleurant la surface du corps 105 de la carte, permettant d'établir une jonction électrique avec un lecteur de carte adapté lorsque celle-ci est introduite dans ce lecteur de carte. De même, le microcircuit 140 est relié aux pistes conductrices 125 du film 110. L'antenne 120 est de préférence protégée par une couche isolante 145, constituée d'un matériau compressible tel que de la mousse, formant un dispositif adapté à maintenir par pression l'antenne 120 selon une position prédéfinie. Alternativement, le dispositif adapté à maintenir par pression l'antenne 120 selon une position prédéfinie peut être formé sur l'autre face du film, c'est-à-dire la face ne comportant pas l'antenne, ou sur les deux faces. Ce dispositif peut également permettre d'écarter l'antenne d'une surface particulière telle que la surface d'une batterie.

La surface du film 110 comprenant les pistes conductrices 125, qui n'est pas comprise dans le corps 105 de carte ni protégée par la couche isolante 145, est de préférence protégée par une pellicule isolante telle qu'une couche de vernis isolant.

Le film 110 est de préférence réalisé en matière plastique telle que du nylon ou du PVC, c'est-à-dire un matériau souple et résistant. Cependant, le film peut également être en papier ou en caoutchouc. L'épaisseur du film est de préférence comprise entre 50µm et 150µm de telle sorte que le film soit souple et résistant. Dans un mode de réalisation particulier, l'épaisseur du film 110 est égale à environ 80µm.

L'épaisseur de la couche isolante 145 est comprise entre 50µm et 150µm. L'épaisseur de la couche isolante 145 est avantageusement égale à environ 100µm.

Alors que la figure 1 illustre un exemple de carte hybride, une structure de carte similaire peut être utilisée pour une carte à double interface ou pour tout autre dispositif comprenant des moyens de communication à contact et sans contact.

Parmi les avantages d'une entité électronique telle que celle représentée sur la figuré 1, il convient de remarquer que la performance de l'antenne n'est plus directement liée à la surface du corps de la carte. De plus, la faible épaisseur du film permet de mettre en oeuvre une entité électronique selon l'invention pour des applications pour lesquelles l'utilisation de ce type d'entité électronique n'avait pas été prévue. La surface de la partie du film comportant l'antenne est donc avantageusement supérieure à celle du corps de la carte. Cependant, la surface de la partie du film comportant l'antenne peut naturellement être inférieure à celle du corps de la carte, en particulier en ce qui concerne des applications pour lesquelles il est nécessaire de déporter l'antenne sans améliorer ses qualités.

Le film souple présente en outre l'avantage de pouvoir s'adapter facilement à des topographies très différentes, afin notamment de positionner une antenne dans des espaces restreints.

La figure 2 illustre un exemple d'utilisation d'une carte à microcircuit selon l'invention, similaire à celle représentée sur la figure 1, pour une application de téléphonie mobile. Le corps 200 du téléphone comprend une double cavité adaptée à recevoir une carte à microcircuit, par exemple une carte SIM standard, et une batterie 210. La double cavité est protégée par un capot 205. La partie de la cavité adaptée à recevoir une carte à microcircuit comprend de préférence des connecteurs de telle sorte que lorsque la carte à microcircuit est en place, il y ait un couplage électrique entre le téléphone et la carte à microcircuit. La carte à microcircuit peut être maintenue par un système de verrouillage standard (non représenté). Ainsi, lorsque le corps 105 de la carte à microcircuit selon l'invention est mis en place dans la cavité, un couplage électrique est réalisé entre le téléphone et le microcircuit 115. Le film 110 est de préférence positionné le long de la batterie 210 de telle sorte que l'antenne 120 soit disposée entre la batterie 210 et le capot 205, comme illustré.

Le positionnement de l'antenne 120 entre la batterie 210 et le capot 205 permet au microcircuit 140 d'échanger des données, sans contact, avec un émetteur/récepteur adapté, en limitant les effets parasitiques liés au corps 200 du téléphone et à la batterie 210.

En raison de la faible épaisseur et de la souplesse du film 110, la carte à microcircuit comportant une antenne déportée peut être insérée et utilisée dans un téléphone mobile qui n'a pas été conçu pour recevoir un tel dispositif.

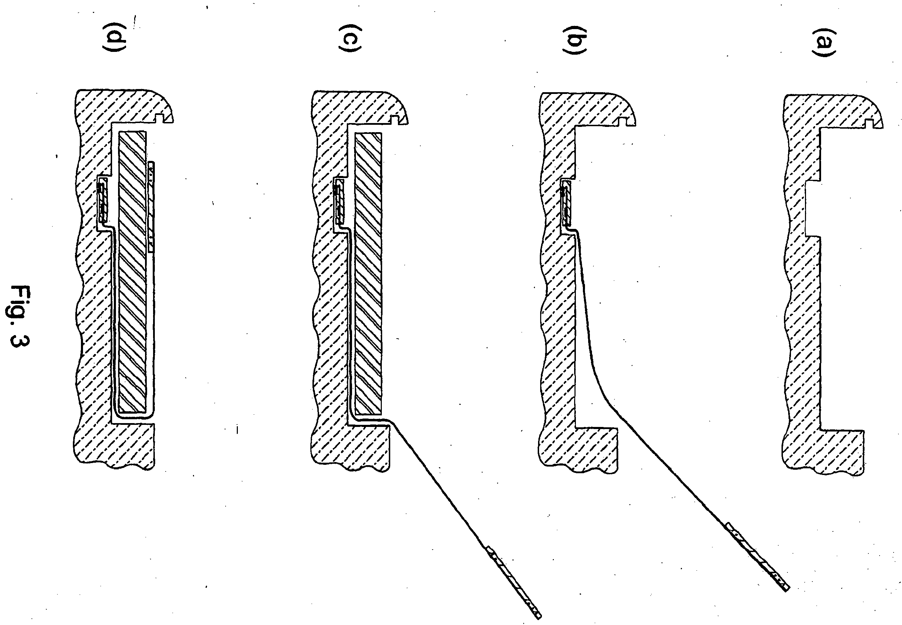

La figure 3, comprenant les figures 3a, 3b, 3c et 3d, présente schématiquement une façon d'installer l'entité électronique de l'invention dans un appareil tel que le téléphone mobile illustré sur la figure 2. La figure 3a représente une partie du corps du téléphone comprenant la double cavité adaptée à recevoir une carte à microcircuit de type SIM ainsi qu'une batterie.

Après avoir mis en place le corps de la carte dans la cavité correspondante (figure 3b) et activé le mécanisme de verrouillage si un tel mécanisme est présent, la batterie est mise en place en maintenant le film comprenant l'antenne de telle sorte que celui-ci ne reste pas sous la batterie (figure 3c). Ensuite, le film comprenant l'antenne est positionné sur la batterie (figure 3d) avant de refermer la cavité du téléphone avec le capot.

L'entité électronique peut naturellement être mise en place différemment, selon la forme et les contraintes du lecteur dans lequel elle doit être insérée.

L'entité électronique de l'invention peut être fabriquée en utilisant certaines étapes de processus standard de fabrication d'entités électroniques telles que des cartes à microcircuits.

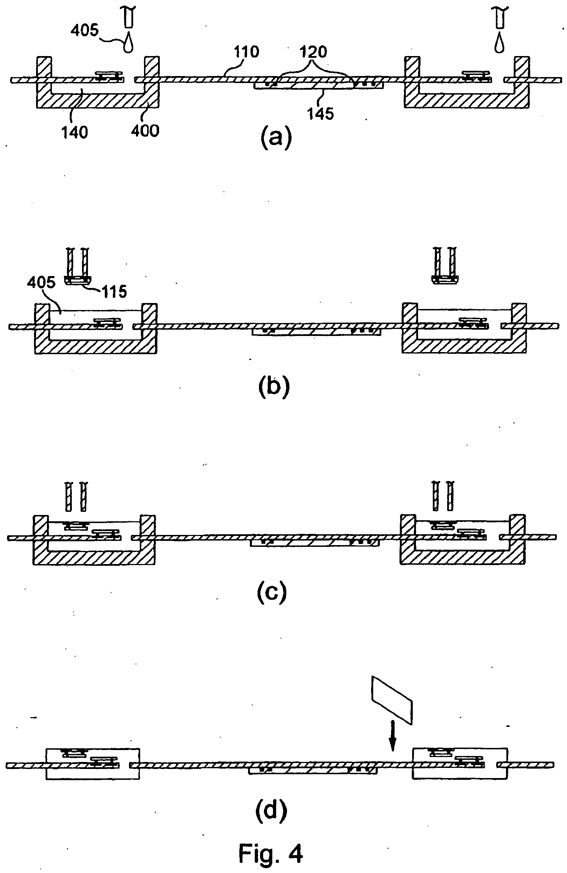

La figure 4 illustre un exemple de fabrication d'une entité électronique selon l'invention, telle que la carte à microcircuit décrite par référence à la figure 1. Selon cet exemple, le procédé de fabrication de cartes à microcircuit permet de fabriquer simultanément plusieurs cartes. Le procédé débute par l'insertion et le positionnement du film 110 dans un moule ouvert 400. Selon le mode de réalisation décrit, les microcircuits 140 utilisés pour les applications sans contact ont été préalablement montés sur le film 110 qui comprend également les antennes 120.

Lorsque le film est positionné dans le moule ouvert 400, les corps de cartes sont moulés par le dépôt, notamment par coulée, du matériau 405 dans le moule (figure 4a). Pour ce faire, il est procédé au dépôt d'une couche de matériau d'une épaisseur conforme aux cartes à microcircuit souhaitées, notamment une épaisseur de 0,76 mm pour des cartes conforme à la norme ISO 7816.

Avantageusement, le film comporte une ouverture permettant au matériau utilisé de se répandre de chaque côté du film afin de simplifier le mécanisme de moulage et d'assurer une bonne fixation du film sur les corps de cartes.

Ensuite, les microcircuits 115 mis en oeuvre pour les applications utilisant des contacts sont positionnés à la surface du matériau déposé, tout en prenant bien soin que les contacts externes connectés aux microcircuits restent à la surface du matériau tel qu'illustré en figure 4b. Le positionnement des microcircuits 115 peut être réalisé à partir d'un bras automatisé comprenant un système à dépression pour tenir les microcircuits.

Enfin, lorsque les circuits 115 sont positionnés, il est procédé à la polymérisation des structures ainsi obtenues, ce qui a pour effet de rigidifier les cartes à microcircuit (figure 4c).

Le film est ensuite découpé selon des sections prédéterminées (figure 4d).

Alternativement, le film peut également comporter les microcircuits mis en oeuvre pour les applications utilisant des contacts afin de faciliter la fabrication de l'entité électronique. Les microcircuits peuvent également être montés sur d'autres couches du corps de la carte à microcircuit.

Il existe bien entendu d'autres procédés de fabrication d'une entité électronique telle que celle présentée ici. En particulier, le corps de carte peut être fabriqué par lamination de feuilles de plastique avec le film.

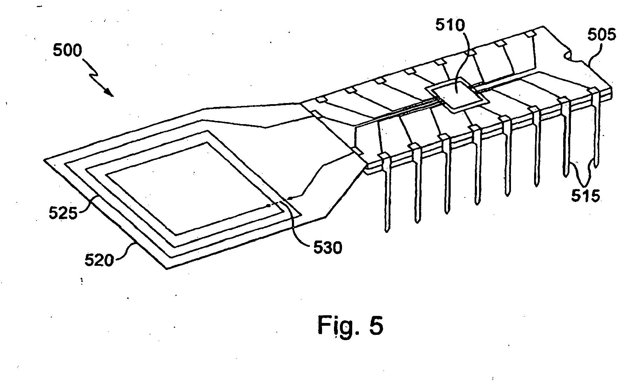

La figure 5 illustre un autre type d'entités électroniques. L'entité électronique 500 représentée sur la figure 5 comprend un boîtier 505, formant le corps de l'entité électronique, qui encapsule un circuit intégré 510 connecté à des pattes de contact 515. L'entité électronique 500 comprend en outre un film 520, de préférence souple et résistant, comprenant lui-même une antenne 525 formée de plusieurs spires d'une piste conductrice. Le film 520 comprend de préférence un pont 530 permettant de relier les deux extrémités de l'antenne 525 à deux contacts du circuit intégré 510. Les caractéristiques de l'entité électronique 500 sont similaires à celles de la carte à microcircuit 100, la différence essentielle résidant dans la forme des corps 105 et 505. Il convient de noter que dans un souci de clarté, la couche supérieure de l'entité électronique 500 n'est pas représentée pour illustrer le circuit intégré 510, ses connexions ainsi que l'antenne 525. La couche supérieure a pour principal objet de protéger le circuit intégré et les pistes conductrices dont l'antenne.

## Revendications

1. Procédé de fabrication d'une carte à microcircuit (100, 500) comprenant un corps (105, 505) sensiblement rigide incorporant au moins un microcircuit (115, 140, 510) et un film souple (110, 520) comportant une antenne (120, 525) connectée audit au moins un microcircuit, ledit film s'étendant partiellement au-delà dudit corps dans lequel il est partiellement intégré, ce procédé étant **caractérisé en ce qu'**il comprend les étapes suivantes,
- positionnement dudit film (110, 520) comprenant ladite au moins une antenne (120, 525) dans un moule (400), ladite antenne étant au moins partiellement à l'extérieur de la cavité de moulage dudit moule ; et,
- dépôt du matériau (405) dudit corps dans ladite cavité de moulage dudit moule.

2. Procédé selon la revendication 1 **caractérisé en ce que** ledit au moins un microcircuit a été préalablement positionné sur ledit film.

## Patentansprüche

1. Verfahren zur Herstellung einer Mikroschaltplatte (100, 500), die einen im Wesentlichen starren Körper (105, 505) umfasst, welcher wenigstens eine Mikroschaltung (115, 140, 510) und einen biegsamen Film (110, 520) enthält, welcher eine Antenne (120, 525) umfasst, welche mit der wenigstens einen Mikroschaltung verbunden ist, wobei sich der Film teilweise außerhalb des Körpers erstreckt, in welchem er teilweise integriert ist, wobei das Verfahren **dadurch gekennzeichnet ist, dass** es die folgenden Schritte umfasst
- Positionierung des Films (110, 520), welcher die wenigstens eine Antenne (120, 525) umfasst, in einer Form (400), wobei die Antenne wenigstens teilweise außerhalb des Formhohlraums der Form ist; und
- Ablagerung des Materials (405) des Körpers in dem Formhohlraum der Form.

2. Verfahren nach Anspruch 1, **dadurch gekennzeichnet, dass** die wenigstens eine Mikroschaltung vorab auf dem Film positioniert wird.

## Claims

1. Method of manufacturing a microcircuit card (100, 500) comprising a substantially rigid body (105, 505) incorporating at least one microcircuit (115, 140, 510) and a flexible film (110, 520) including an antenna (120, 525) connected to said at least one microcircuit, said film extending partially beyond said body into which it is partially integrated,
this method being **characterised in that** it comprises the following steps:
- positioning said film (110, 520) comprising said at least one antenna (120, 525) in a mould (400), said antenna being at least partially outside the moulding cavity of said mould; and
- depositing the material (405) of said body in said moulding cavity of said mould.

2. Method according to Claim 1, **characterised in that** said at least one microcircuit has been positioned on said film beforehand.
